# EUROPEAN PATENT SPECIFICATION

(11) **EP 1 688 897 B1**
(45) Date of publication and mention of the grant of the patent: **07.10.2009**
(21) Application number: 06250598.7
(22) Date of filing: 03.02.2006
(51) Int. Cl.: G08B 15/02

(54) **Tracking device**
Ortungsgerät
Dispositif de localisation

(30) Priority: 03.02.2005 GB 0502202
(43) Date of publication of application: 09.08.2006
(73) Proprietor: IBP-Group Limited, Haslemere Surrey GU27 1JF (GB)
(72) Inventor: Ram, Digby Chetwode, Haselmere, Surrey GU27 1JF (GB)
(74) Representative: Banford, Jonathan

(56) References cited:
- DE-A1- 4 227 923
- GB-A- 2 270 396
- US-A- 5 805 066

## Description

The present invention relates to a tracking device to aid location of a stolen item. More particularly, but not exclusively, it relates to a tracking device to aid location of stolen money or money containers, to be activated automatically in specific circumstances.

Many systems have been developed to address the problem of theft of cash from banks, building societies and the like. An effective approach is to provide devices, disguised as bundles of banknotes, or other systems which may be set off to emit copious clouds of coloured smoke usually comprising a volatilised dye. This smoke shows that a robbery is in progress, hampers the escape of the robber or robbers, stains any banknotes being stolen so that they are probably unusable, and stains the skin and clothing of the robber or robbers so that they may more easily be identified. Other systems incorporate a liquid dye or an ink to stain the banknotes.

Herein, the term obscuration medium will be used to define any form of smoke, coloured dye or ink useful to be so emitted as to obscure a detector.

A range of triggering arrangements have been proposed, ranging from a simple time delay following removal of the device from a cash drawer, up to sophisticated systems such as that described in our earlier UK Patent No. 2372799, in which the device may only be set off once it has left the premises, thus lessening the chances of accidental activation, and of the robber retaliating against staff and customers on the premises.

Similar smoke emitting devices are used in conjunction with cash boxes in transit, ATM cassettes, secure briefcases for carrying valuable documents or jewellery and so forth. In such cases, the device may be activated when the box, case, etc is separated from an authorised vehicle or carrier. Similar devices use a liquid dye or ink to mark stolen bank notes to make them difficult to spend without risk to the perpetrators.

Document DE 4 227 923 discloses simultaneous operation of a beacon and deployment of a dye when a detector detects theft.

Despite the effectiveness of such dye or smoke emitting devices, there is still a chance that particularly determined robbers will manage to make their escape, or that sophisticated criminals might defeat the smoke device by enclosing it in an hermetically sealed casing. It would hence be of benefit if some means of locating the stolen money were provided in addition to the dye or smoke-emitting device. It would also be beneficial if such a means could be added to an existing device, rather than requiring complete replacement thereof.

It has been suggested to incorporate RF receiver or transmission devices in some forms of security apparatus, such as ATM machines, the cassettes for filling them, or in other cash carrying containers. However, such RF devices have a high power consumption and therefore their power supply needs to be replaced or recharged at regular intervals. If their power supply is impaired, such devices may be ineffective or operate only for a short period.

It would be advantageous if the tracking device could remain dormant when not needed, only becoming operational after a robbery.

It is hence an object of the present invention to provide a means of tracking stolen items, such as currency, and particularly to provide such a device which obviates the above disadvantages and which may be used in conjunction with existing smoke or dye-emitting anti-theft devices

According to the present invention, there is provided a tracking device comprising means to detect the presence of an obscuration medium and beacon means operable in response to detection of the presence of said medium, a device to emit said medium on activation and means to activate said emitting device in unauthorised circumstances, for example theft or attempted theft.

The obscuration medium is preferably smoke, liquid dye or ink.

Preferably, said detection means comprises photocell detector means.

Advantageously, the photocell detector means is adapted to detect a particular colour of smoke, dye and/or ink.

Alternatively, the photocell detector means may be adapted to respond simply to obscuration by the smoke, dye and/or ink.

The detection means may be provided with a light source, optionally a light source of a colour complementary to that of the smoke, dye and/or ink, or an infrared light source.

The photocell detector means and optionally the light source may be directed towards currency or other items to be protected.

Alternatively, the detection means comprises reflector means, towards which the photocell detector means and optionally the light source are directed.

The reflector means and one or each of the photocell detector means and the light source may then be separated by a plenum adapted to receive emitted smoke, liquid dye or ink.

Said plenum may contain material adapted to absorb said smoke, liquid dye or ink.

Said absorbent material may comprise a translucent fine metal mesh, optionally a mesh sufficiently fine for capillary flow of liquids to occur therealong.

The tracking device may be included within a cash cassette as used in ATMs, or in a cash carrying container for cash in transit.

Preferably, the beacon means is adapted to transmit a radio frequency signal detectable by a particular receiver means.

Advantageously, the beacon means is provided with a global positioning system (GPS) receiver.

It may then establish its own location and transmit this to the receiver means.

The beacon means may be adapted to retransmit its location whenever it has moved by more than a predetermined distance.

The beacon means may comprise a communication device detectable by global system for mobile communications (GSM).

The location of the beacon means can be established by reference to its distance from a nearby GSM mast.

The beacon means may be adapted to transmit a signal locatable by triangulation methods, using one or a plurality of receiving means, such as GSM masts.

The tracking device may optionally be incorporated into or positioned adjacent to the smoke, dye or ink emitting device.

In a preferred embodiment, the smoke, liquid dye or ink detecting means is adapted to be dormant, using no or little power, until activated.

Said detecting means may be activatable by means to register movement thereof.

The movement registering means may comprise a global positioning system receiver.

Alternatively or additionally, the movement registering means may comprise tilt switch means and/or accelerometer means.

Alternatively or additionally, the movement registering means may comprise reed switch means, optionally adapted to detect removal of the tracking device from an authorised position.

The detecting means may additionally or alternatively be activatable by leaving a radio-frequency field, for example such a field set up within a bank, shop, security vehicle, automatic teller machine (ATM) casing or the like.

The detecting means may be activatable on command, for example by means of a radio command signal transmitted thereto.

The smoke, dye or ink emitting device may be activated on tampering with the device or with a container in which it is located.

The smoke, dye or ink emitting device may be activated by leaving a radio-frequency field, for example such a field set up within a bank, shop, security vehicle, automatic teller machine (ATM) casing or the like.

The smoke, dye or ink emitting device may be activated by movement thereof, optionally subsequent to leaving said radio-frequency field.

The smoke, dye or ink emitting device may alternatively be activatable on command, for example by means of a switch or a remote-control transmitter.

In each case, the activation of the smoke, dye or ink emitting device may optionally take effect only after a delay period.

The smoke, dye or ink detecting means and the smoke, dye or ink emitting device may have different means of activation.

Embodiments of the present invention will now be more particularly described, by way of example, and with reference to the Figure of the accompanying drawings, in which:

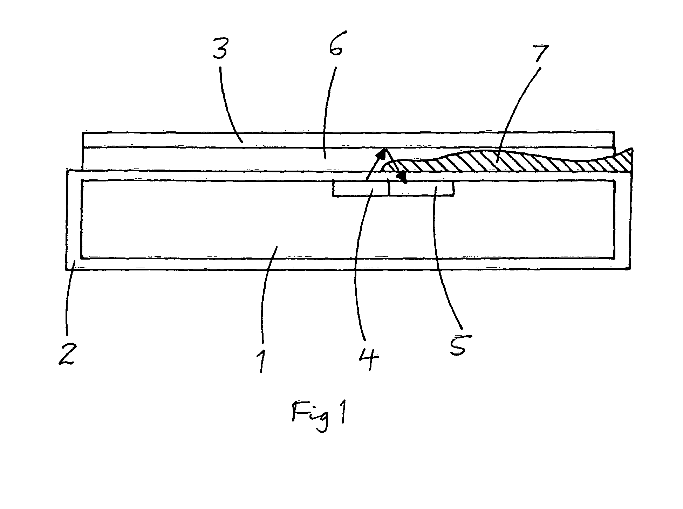

**Figure 1** is a schematic cross-section of a tracking device embodying the present invention.

An anti-theft device comprises a charge of a dye generating composition, containing a dyestuff, operatively linked to a control circuit. The composition may emit a liquid dye, an ink or a coloured smoke. The control circuit in a simple embodiment comprises a detector attuned to a preselected radio-frequency (rf) electromagnetic field, and an ignition circuit connected to a squib or detector embedded in the charge. The device may be camouflaged to appear as a bundle of banknotes and be kept in a cash drawer in, for example, a bank. An rf field is set up within the bank premises, which is picked up by the detector.

In one version, the device may be given to or taken by a robber, mixed in with genuine bundles of banknotes. Alternatively, it may be incorporated in a cash cassette or cash carrying device. Once the robber leaves the bank, the detector no longer picks up the rf field. The control circuit sets off a delay timer, allowing the robber to move clear of the bank premises. Once the timer has run its allotted course, the squib is fired, igniting the charge, which emits copious amounts of coloured smoke, or alternatively emits a liquid dye or ink to stain the banknotes for subsequent identification.

In other embodiments, more complex control arrangements may be employed, such as those disclosed in our UK Patent No. 2372799, or simpler arrangements such as cutting a chain holding a briefcase to a carrier's wrist. In each case, clouds of coloured smoke are emitted, which *inter alia* stain the genuine banknotes etc, being stolen.

To assist location of the banknotes and possibly the robber, a tracking device embodying the present invention is provided comprising a GPS location system, a radio transmitter (for example, one capable of using existing mobile telephone networks to call a central control room to interact with a GSM system) and an ink, dye or smoke detector. The tracking device may be incorporated in the same imitation bundle of banknotes as the anti-theft device, or it may disguised as a further bundle of banknotes.

In some embodiments of the invention, the dye or smoke detector comprises a photocell detector and a light-emitting diode (LED) of a colour complementary to that of the dye or smoke being employed. For example, many such smoke or dye compositions contain an intense red dyestuff, so a green LED would be used. Until the smoke or dye is emitted, the photocell picks up light from the LED, but when red smoke and dye is emitted between (and on to) the photocell and the LED, this absorbs the green light, which is no longer picked up by the photocell.

Alternatively, an infrared LED may be used in which case the "dye" may comprise an IR absorbing composition.

In other embodiments, white light illumination may be used, in conjunction with a photocell specifically sensitive to the colour of the dye. Since the smoke is usually highly opaque, it may also be possible merely to rely on obscuration by the smoke of ambient or built-in illumination to set off the photocell detector. Such an arrangement could be used in conjunction with any colour of smoke.

Figure 1 shows a preferred form of dye, ink or smoke detector, incorporated into a tracking device. A main body 1 of the tracking device, comprising the GPS location system and the radio transmitter, is enclosed within a translucent protective skin 2. A reflective sheet 3 is provided, so spaced from the main body 1 that light emitted from an LED 4 mounted to the main body 1 is reflected therefrom towards a photocell detector 5, also mounted to the main body 1. When dye, ink or smoke is emitted from the anti-theft device, some will penetrate into a region 6 between the main body 1 and the reflective sheet 3, blocking passage of light from the LED 4 to the photocell detector 5. The drop in detected light intensity fully activates the tracking device, as described below.

While the dye, ink or smoke may penetrate between the main body 1 and the reflective sheet 3 without assistance, significantly improved detection results from the presence of a material located in the region 6 between the main body 1 and the reflective sheet 3, that readily and rapidly absorbs dye, ink or smoke. This absorbent material thus encourages dye, smoke or ink 7 to pass into the region 6 between the main body 1 and the reflective sheet 3, and/or retains smoke, dye or ink 7 in the region 6 once it has entered. The absorbent material is initially substantially translucent, but becomes more opaque as the smoke, dye or ink 7 builds up therein.

Where the tracking device is concealed within a simulated bundle of notes, the absorbent material may extend beyond the region 6 to adjacent at least one edge of the bundle, so as to lead smoke, ink or dye to the tracking device (Note: the tracking device can take the form of a slab or plaque no more than ten millimetres thick, so is easy to conceal in a cavity hollowed out within such a simulated bundle of notes).

A particularly effective example of an absorbent material is a fine metal mesh, made sufficiently fine that liquids (e.g. dyes and inks) will flow along it by capillary action (it is believed that such a construction would also be sufficient to retain particulate dyestuffs, such as from coloured smokes). The voids of the mesh allow the passage of light from the LED 4 to the reflective sheet 3 and back through the mesh to the photocell detector 5. However, as the voids fill up with dye, ink or smoke particles, the amount of light passing falls proportionately, causing the photocell detector 5 to activate the tracking device fully. The metal mesh has the added benefits that it is robust and substantially flexible.

At this point, the tracking device is fully activated. It checks its location using the GPS or GSM, and transmits a signal to the central control, announcing that the anti-theft device has been activated, and its current location. It continues to check and report its location at predetermined intervals until turned off by an authorised person with an appropriate key or pass code. In a preferred variant, these intervals are intervals of distance, the tracking device reporting its location only when it has been moved by at least a predetermined distance since its previous report.

Alternatively, the location may be checked through the GSM system by establishing the distance of any signal source from the nearest mast(s).

To maximise the life of the power supply of the tracking device, preferred embodiments remain dormant until activated by a particular trigger or combination of triggers. The ink/dye/smoke detector is then activated. Only when emission of ink, dye or smoke is detected thereby does the tracking device become fully activated, as described above.

Possible triggers include various forms of movement detector. For example, a very low frequency radio transmitter/receiver, draining no more than 12µA from the power supply, can be used to check the position of the tracking device periodically by GPS; a change in position of more than a predetermined distance would then activate the ink, dye or smoke detector. An inbuilt movement detector, for example combining a tilt switch and one or more accelerometers, may also be used. A simple reed switch arrangement is also possible, for example detecting removal of the tracker device from a bank teller's drawer or an ATM casing. Another approach is to detect the tracking device's exit from an rf field set up within a bank premises or the like, and to use this to activate the tracking device. Such an rf field is commonly used as part of the activation arrangements for smoke, dye or ink emitting devices. It is also envisaged that a very low power MHz radio receiver within the tracking device could be used to pick up remote activation or deactivation signals from an authorised person.

It is envisaged that, according to preference, tracking devices could be built which use any one of the above triggers, which respond to more than one of the above triggers as alternatives, or which require more than one such trigger cumulatively.

Many of the above trigger arrangements may also be used as part of the arrangements for setting off a smoke, dye or ink emitting device. However, there is no need for the same trigger to be used for the tracking device and the emitting device. Indeed, it will usually be preferably for the smoke, dye or ink detector to be activated and watching for emissions before the conditions for setting-off the emitting device are reached. Thus, a relatively easily activatable tracking device may be combined with a smoke, dye or ink emitting device having more complex control arrangements, such as those disclosed in our UK Patent No. 2372799.

In the case of an ATM cash cassette, or a cash carrying container, they may act, when closed, as a Faraday cage, suppressing emission of signals. In this case the location determining signal is only sent out when the cassette has been opened by the thieves. Indeed, in order to preserve battery power, opening of the container may be the signal for the dye to be emitted or for the detector to be activated.

The tracking device may thus be added on to any existing smoke or dye emitting anti-theft device, without needing to replace it, and in most embodiments without any modification or adjustments thereto. Since activation of the tracking system will only occur after theft has taken place, the power supply, e.g. batteries, can be maintained for long periods, typically a year or two, without the need for replacement or recharging.

## Claims

1. A tracking device (1) **characterised in that** it comprises means to detect the presence of an obscuration medium (7) and beacon means operable in response to detection of the presence of said medium (7), a device to emit said medium (7) on activation and means to activate said emitting device in unauthorised circumstances, for example theft or attempted theft.

2. A tracking device as claimed in claim 1, **characterised in that** said detection means comprises photocell detector means (5), and a light source (4), optionally a light source (4) of a colour complementary to that of the obscuration medium (7).

3. A tracking device as claimed in claim 2, **characterised in that** the detection means comprises reflector means (3), towards which the photocell detector means (5) and the light source (4) are directed.

4. A tracking device as claimed in claim 3, **characterised in that** the reflector means (3) and one or each of the photocell detector means (5) and the light source (4) are separated by a plenum (6) adapted to receive emitted obscuration medium (7), such as smoke, liquid dye or ink.

5. A tracking device as claimed in claim 4, **characterised in that** said plenum (6) contains material adapted to absorb said medium (7).

6. A device as described in claim 5, **characterised in that** said absorbing material comprises a translucent fine metal mesh, optionally a mesh sufficiently fine for capillary flow of liquids to occur therealong.

7. A tracking device as claimed in any one of the preceding claims, **characterised in that** the beacon means is adapted to transmit a radio frequency signal detectable by a particular receiver means.

8. A tracking device as claimed in any one of the preceding claims, **characterised in that** the beacon means is adapted to resignal its location whenever it has moved by more than a predetermined distance.

9. A tracking device as claimed in any of the proceeding claims, **characterised in that** the beacon means is provided with a global positioning system (GPS) receiver, and is adapted to establish its own location and transmit this to the receiver means, or comprises a communication device detectable by global system for mobile communications (GSM).

10. A tracking device as claimed in any one of the preceding claims, **characterised in that** said detecting means is activatable either by means to register movement thereof, said means preferably comprising tilt switch means to activate accelerometer means, and/or on command, for example by means of a radio command signal transmitted thereto.

## Patentansprüche

1. Nachverfolgungsgerät (1), **dadurch gekennzeichnet, dass** es umfasst: ein Mittel zum Erkennen des Vorhandenseins eines Verdunkelungsmediums (7) und ein Beacon-Mittel, das als Reaktion auf die Erkennung des Vorhandenseins des Mediums (7) betrieben werden kann, ein Gerät zum Aussenden des Mediums (7) bei Aktivierung und ein Mittel zum Aktivieren des Aussendungsgeräts unter unautorisierten Umständen, beispielsweise bei Diebstahl oder Diebstahlsversuch.

2. Nachverfolgungsgerät gemäß Anspruch 1, **dadurch gekennzeichnet, dass** das Erkennungsmittel umfasst: ein Fotozellenerkennungsmittel (5) und eine Lichtquelle (4), optional eine Lichtquelle (4) einer Farbe, die komplementär zu der des Verdunkelungsmediums (7) ist.

3. Nachverfolgungsgerät gemäß Anspruch 2, **dadurch gekennzeichnet, dass** das Erkennungsmittel ein Reflektormittel (3) umfasst, in dessen Richtung das Fotozellenerkennungsmittel (5) und die Lichtquelle (4) gerichtet sind.

4. Nachverfolgungsgerät gemäß Anspruch 3, **dadurch gekennzeichnet, dass** das Reflektormittel (3) und eines der beiden oder beide des Fotozellenerkennungsmittels (5) und der Lichtquelle (4) durch ein Plenum (6) getrennt sind, das angepasst ist zum Empfangen des ausgesendeten Verdunkelungsmediums (7), beispielsweise Rauch, flüssige Farbe oder Tinte.

5. Nachverfolgungsgerät gemäß Anspruch 4, **dadurch gekennzeichnet dass** das Plenum (6) ein Material enthält, das zum Absorbieren des Mediums (7) angepasst ist.

6. Gerät gemäß Anspruch 5, **dadurch gekennzeichnet, dass** das absorbierende Material ein lichtdurchlässiges feines Metallgeflecht umfasst, optional ein Geflecht, das ausreichend fein ist, um das Auftreten einer Kapillarströmung von Flüssigkeiten daran zu ermöglichen.

7. Nachverfolgungsgerät gemäß jedem der vorherigen Ansprüche, **dadurch gekennzeichnet, dass** das Beacon-Mittel angepasst ist zum Übertragen eines Funkfrequenzsignals, das durch ein bestimmtes Empfängermittel erkennbar ist.

8. Nachverfolgüngsgerät gemäß jedem der vorherigen Ansprüche, **dadurch gekennzeichnet, dass** das Beacon-Mittel angepasst ist zum Neusignalisieren seiner Position, wann immer es sich um mehr als eine vorgegebene Distanz bewegt hat.

9. Nachverfolgungsgerät gemäß jedem der vorherigen Ansprüche, **dadurch gekennzeichnet, dass** das Beacon-Mittel mit einem GPS-Empfänger (Global Positioning System) ausgestattet ist und angepasst ist zum Feststellen seiner eigenen Position und zum Übertragen dieser Position zu dem Empfängermittel, oder dass es ein Kommunikationsgerät umfasst, das durch ein globales System zur mobilen Kommunikation (GSM) erkannt werden kann.

10. Nachverfolgungsgerät gemäß jedem der vorherigen Ansprüche, **dadurch gekennzeichnet, dass** das Erkennungsmittel aktivierbar ist entweder durch ein Mittel zum Registrieren von dessen Bewegung, wobei das Mittel vorzugsweise Quecksilberschaltermittel zum Aktivieren von Mitteln zur Beschleunigungsmessung umfasst, und/oder auf Befehl, beispielsweise mithilfe eines zu diesem übertragenen Funkbefehlssignals.

## Revendications

1. Dispositif de suivi (1) **caractérisé en ce qu'**il comprend un moyen pour détecter la présence d'un milieu masquant (7) et un moyen de balise lumineuse opérationnel en réponse à la détection de la présence dudit milieu (7), un dispositif pour émettre ledit milieu (7) lors d'une activation et un moyen pour activer ledit dispositif émetteur dans des circonstances non autorisées, par exemple lors d'un vol ou d'une tentative de vol.

2. Dispositif de suivi selon la revendication 1, **caractérisé en ce que** ledit moyen de détection comprend un moyen de détecteur à photocellule (5), et une source de lumière (4), facultativement une source de lumière (4) d'une couleur complémentaire à celle du milieu masquant (7).

3. Dispositif de suivi selon la revendication 2, **caractérisé en ce que** le moyen de détection comprend un moyen de réflecteur (3), vers lequel le moyen de détecteur à photocellule (5) et la source de lumière (4) sont dirigés.

4. Dispositif de suivi selon la revendication 3, **caractérisé en ce que** le moyen de réflecteur (3) et un ou chacun du moyen de détecteur à photocellule (5) et de la source de lumière (4) est séparé par un écartement (6) adapté pour recevoir le milieu masquant émis (7), tel que de la fumée, une teinte ou une encre liquide.

5. Dispositif de suivi selon la revendication 4, **caractérisé en ce que** ledit écartement (6) contient un matériau adapté pour absorber ledit milieu (7).

6. Dispositif tel que décrit dans la revendication 5, **caractérisé en ce que** ledit matériau absorbant comprend une maille de métal fine translucide, facultativement une maille suffisamment fine pour qu'un écoulement capillaire de liquides se produise le long de celle-ci.

7. Dispositif de suivi selon l'une quelconque des revendications précédentes, **caractérisé en ce que** le moyen de balise lumineuse est adapté pour transmettre un signal de radiofréquence détectable par un moyen de récepteur particulier.

8. Dispositif de suivi selon l'une quelconque des revendications précédentes, **caractérisé en ce que** le moyen de balise lumineuse est adapté pour signaliser à nouveau son emplacement chaque fois qu'il s'est déplacé de plus d'une distance prédéterminée.

9. Dispositif de suivi selon l'une quelconque des revendications précédentes, **caractérisé en ce que** le moyen de balise lumineuse est pourvu d'un récepteur de système de positionnement mondial (GPS), et adapté pour établir son propre emplacement et le transmettre au moyen de récepteur, ou comprend un dispositif de communication détectable par le système mondial de communication avec les mobiles (GSM).

10. Dispositif de suivi selon l'une quelconque des revendications précédentes, **caractérisé en ce que** le moyen de détection est activable soit par un moyen destiné à enregistrer son mouvement, ledit moyen comprenant de préférence un moyen de permutation d'inclinaison destiné à activer un moyen d'accéléromètre et/ou sur commande, par exemple, au moyen d'un signal de commande radio qui lui est transmis.
